# EUROPEAN PATENT APPLICATION

(11) **EP 3 748 161 A1**
(43) Date of publication of application: **09.12.2020**
(21) Application number: 19747222.8
(22) Date of filing: 23.01.2019
(51) Int. Cl.: F04B 49/12, F04B 13/00, F04B 53/14, F04B 53/16, G01N 30/32

(54) **LIQUID CHROMATOGRAPH**

(30) Priority: 02.02.2018 JP 2018016919
(71) Applicant: Hitachi High-Tech Corporation, Minato-ku Tokyo 105-6409 (JP)
(72) Inventor: TSUKADA, Nobuhiro, Tokyo 105-6409 (JP); OGATA, Izumi, Tokyo 105-6409 (JP); ITO, Shinya, Tokyo 105-6409 (JP); TOBITA, Midori, Tokyo 105-6409 (JP)
(74) Representative: MERH-IP Matias Erny Reichl Hoffmann Patentanwälte PartG mbB
(86) International application number: PCT/JP2019/001963
(87) International publication number: WO 2019/151062

(57) **Abstract**

Provided is a liquid chromatograph in which a solvent can be quickly replaced in a liquid delivery pump. The liquid chromatograph is provided with a liquid delivery pump 1 that takes in and discharges a solvent, and the liquid delivery pump is provided with: a pump head 111 in which an intake passage 10, a pressurizing chamber 12, and a discharge passage 103 are formed; a plunger 2; and a seal 61 that seals the pressurizing chamber. The liquid chromatograph 100 is configured such that a bottom dead center 21 of the plunger is disposed nearer to the upper end of the pressurizing chamber than the intake passage . The bottom dead center of the plunger may be disposed such that an upper surface of the plunger and a surface of the intake passage at the lower-end side of the pressurizing chamber are substantially the same.

## Description

### Technical Field

The present invention relates to a liquid chromatograph, and particularly relates to a liquid delivery pump thereof.

### Background Art

In a liquid chromatograph, by a liquid delivery pump, a mobile phase is taken in and is delivered to a separation column together with a sample introduced by a sample introduction device. The sample introduced to the separation column is separated into respective components and these components are detected by various detectors. A plunger pump is generally used as such a liquid delivery pump (for example, PTLs 1 and 2).

### Prior Art Literature

### Patent Literature

PTL 1: JP-A-2010-48155
PTL 2: JP-A-2003-293946

### Summary of Invention

### Technical Problem

In an analysis using the liquid chromatograph, when an analysis using one solvent is switched to an analysis using another solvent, it is necessary to replace the solvent in a pipe with the other solvent. In order to shorten an analysis cycle and increase the number of analyzes (throughputs) within a certain period of time, it is necessary to quickly replace a solvent discharged from the liquid delivery pump with a next solvent.

However, inside the plunger pump, a reciprocating motion of a plunger for taking in and discharging the solvent causes a flow of the solvent, and a liquid stagnation part is generated in a vicinity of a seal provided at a lower end of a pressurizing chamber. When replacement of the solvent in the liquid stagnation part is slow, replacement of the solvent discharged from the liquid delivery pump is delayed.

Therefore, an object of the invention is to provide a liquid chromatograph capable of accelerating replacement of a solvent in a liquid stagnation part.

### Solution to Problem

In order to solve the above problems, for example, configurations described in the claims are adopted.

The present application includes a plurality of means for solving the above problems, one example thereof is a liquid chromatograph provided with a liquid delivery pump that takes in and discharges a solvent, the liquid delivery pump is provided with: a pump head in which an intake passage, a pressurizing chamber, and a discharge passage are formed; a plunger; and a seal that seals the pressurizing chamber, and a bottom dead center of the plunger is disposed nearer to the upper end of the pressurizing chamber than the intake passage.

### Advantageous Effect

According to the invention, a liquid chromatograph in which a solvent can be quickly replaced in a liquid delivery pump can be provided.

Problems, configurations, and effects other than those described above will become apparent from the following description of the embodiments.

### Brief Description of Drawings

[FIG. 1] FIG. 1 is a configuration example of a liquid chromatograph.
[FIG. 2] FIG. 2 is a cross-sectional view of a plunger pump when a plunger is at a bottom dead center (Embodiment 1) .
[FIG. 3] FIG. 3 is a cross-sectional view of the plunger pump when the plunger is at a top dead center (Embodiment 1) .
[FIG. 4] FIG. 4 is a cross-sectional view of a plunger pump when a plunger is at a bottom dead center (Embodiment 2) .
[FIG. 5] FIG. 5 is a cross-sectional view of the plunger pump when the plunger is at a bottom dead center (Embodiment 2) .

### Description of Embodiments

Embodiments will be described below with reference to the drawings.

In the following description, a liquid chromatograph using a liquid delivery pump in which a first plunger pump and a second plunger pump are disposed in series is used as an example.

### [Embodiment 1]

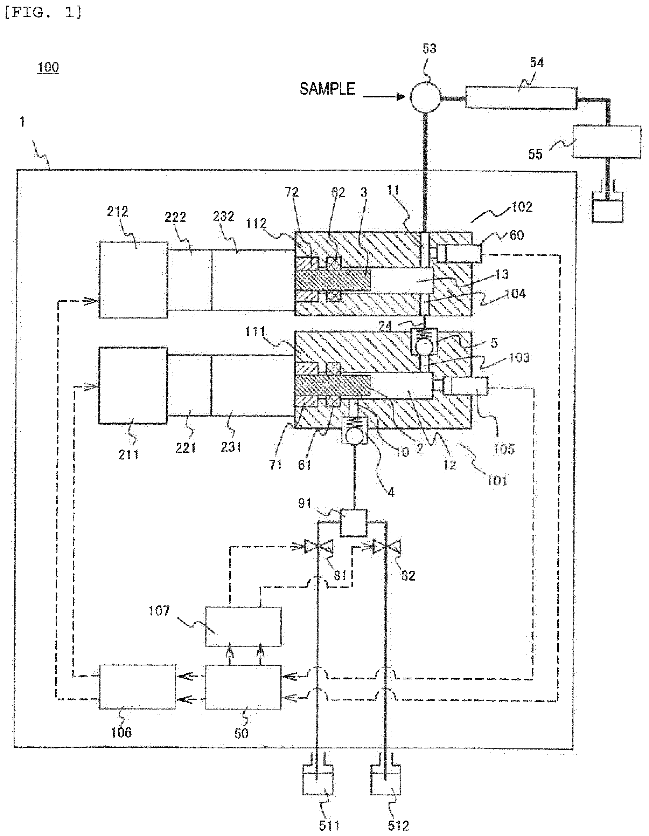

FIG. 1 is a configuration example of a liquid chromatograph 100 in the present embodiment.

Main components of a liquid delivery pump 1 include a first plunger pump 101, a second plunger pump 102, a solenoid valve 81, a solenoid valve 82, a controller 50, a motor driver 106, and a solenoid valve driver 107.

A first pump head 111 in which a first intake passage 10, a first discharge passage 103, and a first pressurizing chamber 12 are formed is provided in the first plunger pump 101. A check valve 4 and a check valve 5 are disposed on passages of the first intake passage 10 and the first discharge passage 103 to limit a flow direction of solvent liquid.

A second pump head 112 in which a second intake passage 104, a second discharge passage 11, and a second pressurizing chamber 13 are formed is provided in the second plunger pump 102.

The check valve 5 and the second intake passage 104 are connected by a connection passage 24. That is, the first plunger pump 101 and the second plunger pump 102 are disposed in series, and the first plunger pump 101 is provided on an upstream side.

A first plunger 2 which is a pressurizing member is slidably held by a bearing 71 in the first plunger pump 101. A second plunger 3 which is a pressurizing member is slidably held by a bearing 72 in the second plunger pump 102.

A seal 61 prevents liquid leakage from the first pressurizing chamber 12, and a seal 62 prevents liquid leakage from the second pressurizing chamber 13.

Rotation of a first electric motor 211 is decelerated by a reduction gear 221 and converted into a linear motion by a linear motion device 231, causing the first plunger 2 to reciprocate. Similarly, rotation of a second electric motor 212 is decelerated by a reduction gear 222 and converted into a linear motion by a linear motion device 232, causing the second plunger 3 to reciprocate.

Here, the reduction gear 221 and the linear motion device 231 can be called a power transmission mechanism device in a broad sense, since rotational power of the electric motor 211 is amplified and converted into a linear motion force by combining the reduction gear 221 and the linear motion device 231. Specific examples of the reduction gear 221 include a spur gear, a pulley, a planetary gear, a worm gear, or the like.

A main reason for providing the reduction gear is to increase a torque of the electric motor, and when the electric motor has an ability to generate a sufficient torque, it is not necessary to provide the reduction gear. Specific examples of the linear motion device 231 include a ball screw, a cam, a rack and pinion, or the like, and are not particularly limited in carrying out the invention.

When the first plunger pump 101 performs an intake operation, one of the solenoid valves 81 and 82 is opened and the other is closed, and one of solvents 511 and 512 is taken in. The taken-in solvent is taken into the first pressurizing chamber 12 passing through a merging part 91, the check valve 4, and the first intake passage 10, then is compressed, is taken into the second pressurizing chamber 13 passing through the first discharge passage 103, the check valve 5, the connection passage 24 and the second intake passage 104, and is discharged from the second discharge passage 11.

The controller 50 gives a command value to the motor driver 106 and the solenoid valve driver 107 based on signals from a pressure sensor 60 and a pressure sensor 105. The motor driver 106 applies drive power to the electric motors 211 and 212 based on the command value of the controller 50, and the solenoid valve driver 107 applies drive power to the solenoid valves 81 and 82 based on the command value of the controller 50.

A sample to be analyzed is injected by an injector 53 into the solvent discharged from the liquid delivery pump 1. The solvent into which the sample is injected enters a separation column 54 and is separated into each component, and thereafter, a detector 55 detects an absorbance, a fluorescence intensity, a refractive index, or the like corresponding to a sample component. The separation column 54 is filled with fine particles, and a load pressure of several tens of megapascals to over 100 megapascals is generated in the plunger pump due to a fluid resistance when the solvent flows through gaps among the fine particles. A magnitude of this load pressure differs depending on a diameter of the separation column and a passing flow rate.

When an analysis using the solvent 511 is switched to an analysis using the solvent 512, before the analysis using solvent 512, it is necessary to switch the solenoid valve 81 from the open state to a closed state, then switch the solenoid valve 82 from the closed state to an open state, drive the liquid delivery pump 1 to make the solvent 512 flow so as to replace the solvent 511 inside an inside (the check valve 4, the first intake passage 10, the first pressurizing chamber 12, the first discharge passage 103, the connection passage 24, the second intake passage 104, the second pressurizing chamber 13, and the second discharge passage 11) of the liquid delivery pump 1 and an inside of the injector 53, the separation column 54, the detector 55, and a pipe connecting the injector 53, the separation column 54, and the detector 55 with the solvent 512 . At this time, the number of analysis that can be performed within a certain period of time can be increased by shortening time required for the solvent replacement.

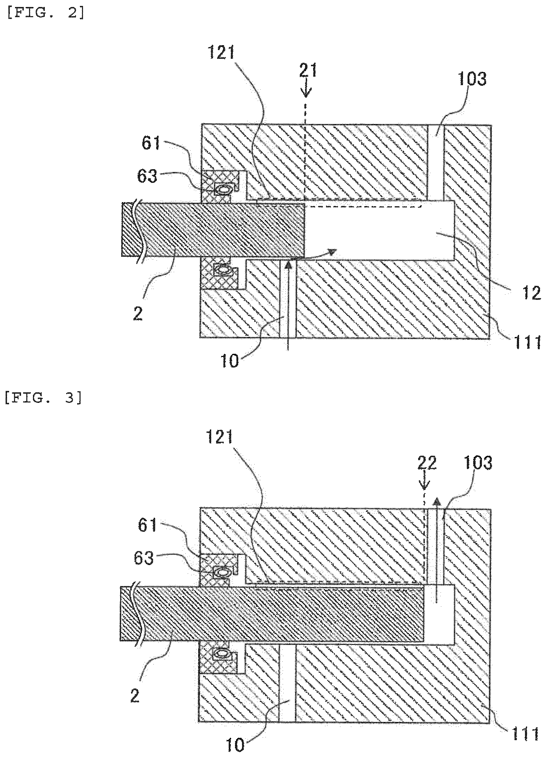

FIG. 2 is a cross-sectional view of the first plunger pump 101 when the first plunger 2 is at a bottom dead center, and FIG. 3 is a cross-sectional view of the first plunger pump 101 when the first plunger 2 is at a top dead center, and an example of the solvent replacement inside the first pressurizing chamber 12 by a movement of the first plunger 2 in the first plunger pump 101 is shown. The check valve 4, the check valve 5, and the pressure sensor 105 are omitted to illustrate only the solvent replacement. Arrows in FIGS. 2 and 3 indicate a flow of the solvent.

Although omitted in FIG. 1, the seal 61 is provided with a spring 63 inside for tightening the plunger 2 to have a pressure resistance. The solvent in a vicinity of the spring 63 is a stagnation part in the flow of the solvent in the pressurizing chamber 12 generated by the movement of the plunger 2 inside the pressurizing chamber 12, and therefore is difficult to be replaced by the taken-in solvent.

In configurations of FIGS. 2 and 3, the intake passage 10 is disposed at a lower-end side of the pressurizing chamber 12. As a result, a distance from the intake passage to a liquid stagnation part in the vicinity of the spring 63 is shorter as compared with that in a case where the intake passage 10 is disposed on an upper-end side of the pressurizing chamber 12, so that the solvent in that part can be quickly replaced.

Further, as shown in FIG. 2, the bottom dead center 21 which is an intake completion point of the plunger 2 is disposed closer to the upper end of the pressurizing chamber 12 than the intake passage 10. Therefore, the flow of the solvent flowing through the intake passage 10 is blocked by the plunger 2 and does not reach an inner surface vicinity 121 of the pressurizing chamber 12 on an opposite side of the plunger 2 with respect to the intake passage 10. As a result, during a period from when the plunger shown in FIG. 3 moves up to when the plunger is brought into a state of reaching a top dead center 22 which is a discharge completion point of the plunger 2, the solvent that does not reach the inner surface vicinity 121 of the pressurizing chamber 12 flows out from the discharge passage 103, and replacement of the solvent flowing out from the pressurizing chamber 12 is accelerated.

### [Embodiment 2]

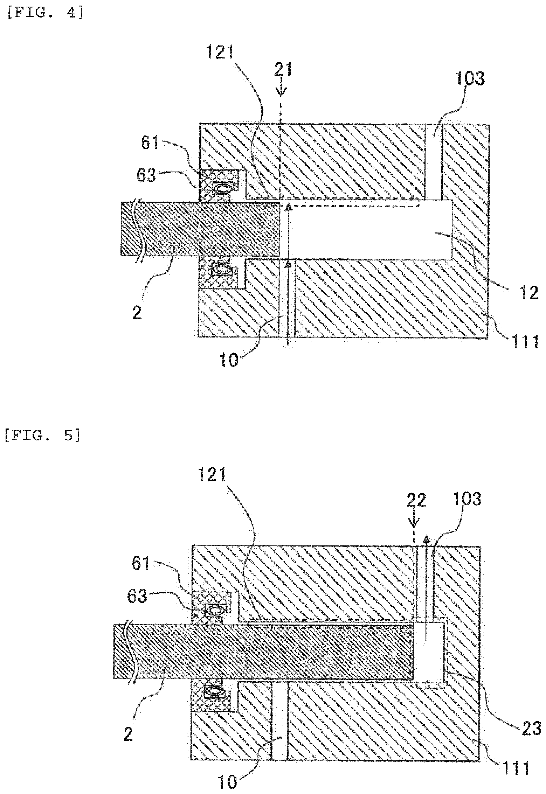

FIG. 4 is a cross-sectional view of the first plunger pump 101 when the first plunger 2 is at the bottom dead center, and FIG. 5 is a cross-sectional view of the first plunger pump 101 when the first plunger 2 is at the top dead center, and another example of the solvent replacement inside the first pressurizing chamber 12 by the movement of the first plunger 2 in the first plunger pump 101 is shown. Arrows in FIGS. 4 and 5 indicate the flow of the solvent.

A difference from the configurations of FIGS. 2 and 3 is that the bottom dead center 21 of the plunger 2 is located immediately on the lower-end side of the pressurizing chamber 12 with respect to the intake passage 10 as shown in FIG. 4, that is, an upper surface of the plunger 2 and a surface of the intake passage 10 at the lower-end side of the pressurizing chamber 12 are substantially the same.

As a result, the solvent flowing in from the intake passage 10 reaches the inner surface vicinity 121 of the pressurizing chamber 12 on the opposite side of the plunger 2 with respect to the intake passage 10 by a jet flow. Then, during a period from when the plunger 2 shown in FIG. 5 moves up to when the plunger 2 is brought into a state of reaching the top dead center 22, the solvent flowing in from the intake passage does not reach a liquid remaining part 23 at an upper end of the pressurizing chamber 12, so that this part of the solvent flows out from the discharge flow channel 103. As a result, replacement of the solvent flowing out from the pressurizing chamber 12 is accelerated.

By switching the bottom dead center of the plunger to either of FIG. 2 and FIG. 4 according to physical properties such as a viscosity or a diffusion coefficient of the solvent, a speed of taking in and discharging the plunger, or the like, solvent replacement time can be minimized. The switching can be performed by, for example, the controller 50, or may be performed by another control device.

As described above, according to the invention, the solvent flowing into the pressurizing chamber from the intake passage flows out from the discharge passage without reaching a local portion of the pressurizing chamber. Thus, the replacement of the solvent flowing out from the liquid delivery pump can be accelerated.

It is needless to say that the invention is not limited to the above embodiments and includes various modifications.

For example, the same effect can also be obtained by applying a configuration of the first plunger pump 101 described in the embodiment to the second plunger pump 102.

Further, in the embodiments, an example of the liquid chromatograph 100 using the liquid delivery pump 1 in which the first plunger pump 101 and the second plunger pump 102 are disposed in series is described, but the invention is also applicable to a liquid chromatograph using a liquid delivery pump in which the first plunger pump 101 and the second plunger pump 102 are disposed in parallel.

### Reference Sign List

- 1: liquid delivery pump
- 2: first plunger
- 3: second plunger
- 4: check valve
- 5: check valve
- 10: first intake passage
- 11: second discharge passage
- 12: first pressurizing chamber
- 13: second pressurizing chamber
- 21: bottom dead center
- 22: top dead center
- 23: liquid remaining part
- 24: connection passage
- 50: controller
- 53: injector
- 54: separation column
- 55: detector
- 60: pressure sensor
- 61: seal
- 62: seal
- 63: spring
- 71: bearing
- 72: bearing
- 81: solenoid valve
- 82: solenoid valve
- 91: merging part
- 100: liquid chromatograph
- 101: first plunger pump
- 102: second plunger pump
- 103: first discharge passage
- 104: second intake passage
- 105: pressure sensor
- 106: motor driver
- 107: solenoid valve driver
- 111: first pump head
- 112: second pump head
- 121: inner surface vicinity of pressurizing chamber 12
- 211: first electric motor
- 212: second electric motor
- 221: reduction gear
- 222: reduction gear
- 231: linear motion device
- 232: linear motion device
- 511: solvent
- 512: solvent

## Claims

1. A liquid chromatograph, comprising:
a liquid delivery pump that takes in and discharges a solvent, wherein
the liquid delivery pump includes:
a pump head in which an intake passage, a pressurizing chamber, and a discharge passage are formed;
a plunger; and
a seal that seals the pressurizing chamber, and
a bottom dead center of the plunger is disposed nearer to an upper end of the pressurizing chamber than the intake passage.

2. A liquid chromatograph, comprising:
a liquid delivery pump that takes in and discharges a solvent, wherein
the liquid delivery pump includes:
a pump head in which an intake passage, a pressurizing chamber, and a discharge passage are formed;
a plunger; and
a seal that seals the pressurizing chamber, and a bottom dead center of the plunger is disposed such that an upper surface of the plunger and a surface of the intake passage at a lower-end side of the pressurizing chamber are substantially the same.

3. The liquid chromatograph according to claim 1 or 2, wherein
the liquid delivery pump includes a controller that relatively changes the bottom dead center of the plunger relative to a position of the intake passage according to a driving speed of the plunger or a physical property of the solvent.
